# EUROPEAN PATENT SPECIFICATION

(11) **EP 2 523 078 B1**
(45) Date of publication and mention of the grant of the patent: **26.12.2018**
(21) Application number: 11189651.0
(22) Date of filing: 18.11.2011
(51) Int. Cl.: G06F 3/044, G06F 3/041, G02F 1/1333

(54) **An active touch sensing circuit apparatus**
Aktive berührungsempfindliche Schaltvorrichtung
Appareil à circuit de détection de commande tactile

(30) Priority: 12.05.2011 TW 100116715
(43) Date of publication of application: 14.11.2012
(73) Proprietor: Acer Incorporated, New Taipei City 221 (TW)
(72) Inventor: Tai, Ya-Hsiang, 300 Hsinchu City (TW); Chou, Lu-Sheng, 300 Hsinchu City (TW); Chiu, Hao-Lin, 300 Hsinchu City (TW)
(74) Representative: Becker Kurig Straus

(56) References cited:
- CN-C- 100 405 146
- GB-A- 2 473 511
- US-A1- 2005 116 937
- US-A1- 2008 211 747
- US-A1- 2009 115 735
- US-A1- 2009 256 816
- US-A1- 2011 057 902

## Description

### Field of the Invention

The present invention relates to an active touch sensing circuit apparatus, capable of achieving a high signal sensing intensity.

### Background of the Invention

The application range of touch panels is very wide, including portable information, consumer and communication products, for finance or commercial use, as factory automatic control systems, and for public information use. In addition, since many large electronic factories have introduced touch action apparatus such as smart cell phones, tablet computers etc., individual users have come to fully appreciate the convenience of touch products. This has also generated another change in conventional operation practice, where the more convenient touch solutions are being introduced into consumer products, in order to replace relatively aged, failed, or corroded mechanical switches. The flat layout of such apparatus is able to be integrated with the design of most electronic apparatus very easily, thus the demand for touch panels is increased.

The detection of surface capacitance change is often used as the basic operation principle of touch sensing unit, wherein the sensation of positioning and pressing action is carried at the contact point. When a conductive part of a human body such as a finger touches the metal sheet of a sensing unit, a small change in capacitance value will immediately occur on the metal sheet. When the conductive part is moved on the metal sheet, the electric field of the metal sheet will be changed at the same time, and therefore the capacitance value will be changed. The touch sensing unit collects these small changes and deals with the coordinates of feedback contact point and the action form; these are the basic touch sensing mechanisms. The touch sensing circuit is one of the main components in the touch panel. It is used to sense the contact position of a body, so that the control system can know the actual contact position of a body on the panel in order to control the apparatus.

Patent No. 100405146C of the People's Republic of China (PROC) discloses a touch liquid crystal display which outputs a dynamic voltage to a node in accordance with a dynamic change in the capacitance value of the touch capacitance during a specific period. However, the above-mentioned conventional touch liquid crystal display needs an extra gate electrode to control and drive the scan lines, which would increase the cost. The voltage is used as the response signal, and the source electrode of a sensing circuit is used to read the voltage value, which is apt to vary among the components. This case utilizes the partial voltage concept of capacitance for sensing, so its response signal is weaker and hard to read. Finally, when the touch panel is not touched, a large current is still passed, thus the power consumption is large, which is unfavorable for a touch panel with a large area.

From the above-mentioned description, the touch sensing circuit of a conventional touch panel is unable to achieve the required demand.

### Summary of the Invention

This in mind, the invention aims at providing a touch sensing circuit with a high sensing signal intensity, in order to reduce the cost of a read circuit.

This is achieved by an active touch sensing circuit with a controllable gate voltage close time, according to Claim 1, which can be used in the in-cell or the on-cell touch panel. When the capacitance is touched, its capacitance value will be changed at the same time, so that a serious RC delay effect will be generated for the wave form of the gate electrode of transistor. The drain electrode of the transistor will output a larger open current, making the open current easier to read, raising the intensity of the sensing signal, and reducing the erroneous judgment rate.

The dependent claim pertains to corresponding further developments and improvements.

As will be seen more clearly from the detailed description below, an active matrix touch sensing circuit apparatus used in a touch panel including a sensing unit, a resistance, and a thin film transistor is disclosed. The first end of the sensing unit connects the prescribed constant voltage. The first end of the resistance connects the second end of sensing unit, and the second end of the resistance connects the first scan line. The control end of the thin film transistor connects the second end of the sensing unit, the second scan line connects the input end of the thin film transistor, and the read out line connects the output end of the thin film transistor. The sensing value of the sensing unit is changed, when the sensing unit senses a body touched the circuit, and wave form of the control end is changed. The output end generates an open current, and the read out line transmits the open current.

The sensing unit of the invention comprises a variable capacitance, wherein when the body touches the variable capacitance, the capacitance value of the variable capacitance will be changed.

The resistance of the invention can be achieved by a thin film transistor.

When the capacitance value is changed, the corresponding wave form will be changed.

When the wave form is inputted in the invention, the wave form will be changed, because a RC delay is generated by the resistance and the variable capacitance.

The first scan line of the invention comprises a first signal. The first signal is changed from the high electric potential to the low electric potential. The second scan line includes a second signal. The second signal is changed from the low electric potential to the high electric potential. Wherein, there is the prescribed time interval between the first signal and the second signal.

### Brief Description of the Drawings

In the following, the invention is further illustrated by way of example, taking reference to the following drawings. Thereof:
- Figure 1: illustrates the schematic diagram of the conventional liquid crystal display;
- Figure 2: illustrates partial circuit diagram for the conventional liquid crystal display of figure 1;
- Figure 3: illustrates the schematic diagram of the active touch sensing circuit for an embodiment of the invention;
- Figure 4: illustrates the schematic diagram for the active touch sensing circuit of figure 3 with the first scan line and the second scan line as well as the first signal and the second signal; and
- Figure 5: shows the measurement result of the active touch sensing circuit shown in figure 3.

### Detailed Description

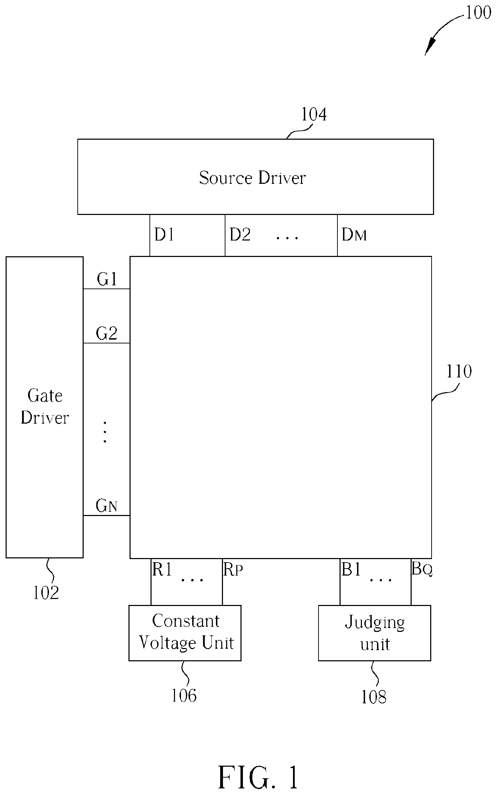

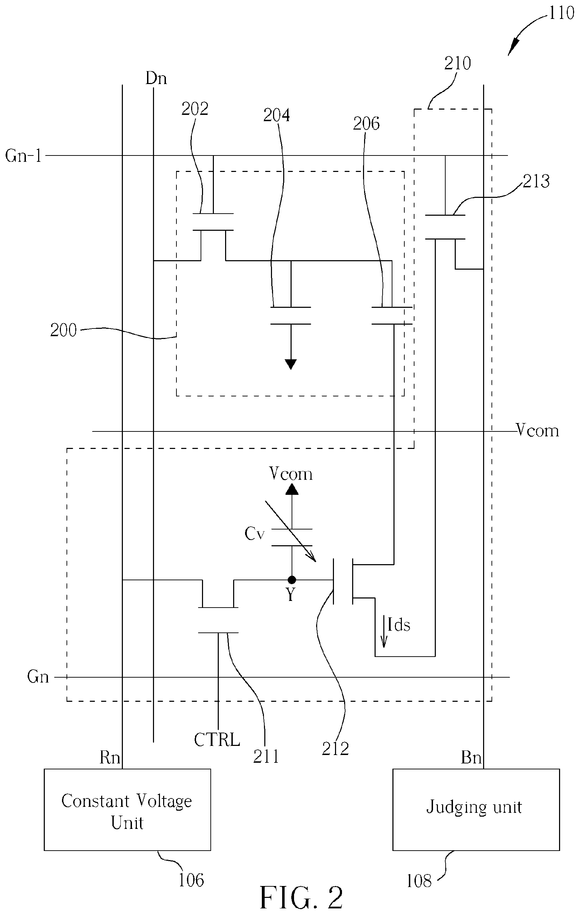

Please refer to figure 1 and figure 2, wherein figure 1 illustrates the schematic diagram of a liquid crystal display, and figure 2 illustrates a partial circuit diagram of the liquid crystal display of figure 1.

The liquid crystal display 100 of figure 1 includes a gate driver 102, a source driver 104, a constant voltage unit 106, a judging unit 108 and a liquid crystal display panel 110. The liquid crystal display panel 110 of figure 1 includes a plurality of pixel unit 200 and a plurality of sensing circuit 210 shown in figure 2.

As shown in figure 2, every sensing circuit 210 is connected to the pixel unit 200. It should be noted that the number of sensing circuit 210 in figure 2 may be less than or equal to the number of pixel units 200. The plurality of sensing circuits 210 in figure 2 are distributed evenly on the liquid crystal display panel 110 of figure 1. Every pixel unit 200 in figure 2 includes a switch transistor 202, a storing capacitance 204 and a liquid crystal capacitance 206. The liquid crystal capacitance 206 is made up of two electrodes. One electrode is connected to the common voltage V_{com}, and another electrode is connected to the switch transistor 202. The liquid crystal molecules are distributed between two electrodes. When the switch transistor 202 receives the scanning signal of scan line G_{N-1} generated from the gate driver 102 in figure 1, the information signal voltage generated from the source driver 104 in figure 1 will be transmitted to the liquid crystal capacitance 206 in figure 2 through the information line Dₙ.

The liquid crystal molecules of liquid crystal capacitance 206 in figure 2 control the light intensity passing through the liquid crystal molecules in accordance with different arrangement directions of voltage differences between the common voltage V_{com} and information signal voltage. The storing capacitance 204 in figure 2 is used to store the information signal voltage, so that the voltage difference between the common voltage and information signal voltage can be maintained by the liquid crystal capacitance 206 when the switch capacitance 202 in figure 2 is shut, thus the light intensity passing through the liquid crystal molecules can be kept constant. The sensing circuit 210 in figure 2 includes a first transistor 211, a second transistor 212, a third transistor 213 and a sensing unit. The sensing unit is used to generate a dynamic voltage at node Y during a specific period. Thus in this embodiment, the sensing unit might be a touch capacitance Cᵥ. The touch capacitance Cᵥ will output a dynamic voltage to node Y in accordance with the dynamic change of capacitance value of touch capacitance Cᵥ during the specific period.

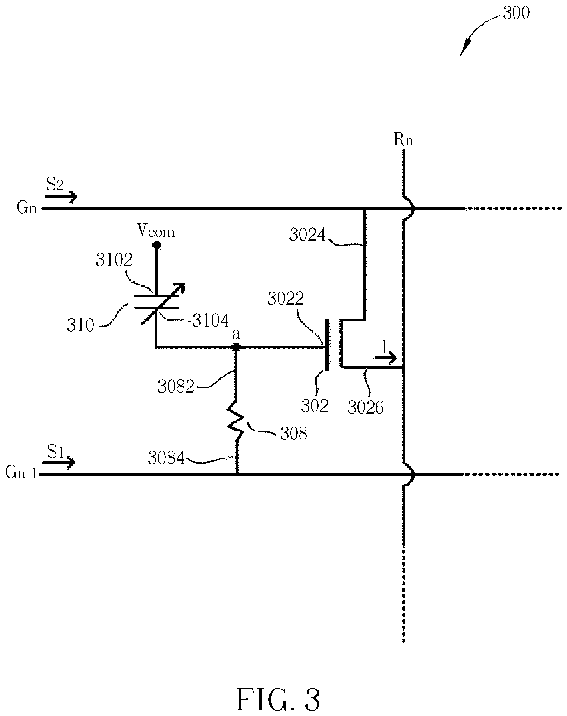

Please refer to figure 3, which illustrates the schematic diagram of the active touch sensing circuit according to an exemplary embodiment of the invention. In figure 3, the active touch sensing circuit apparatus 300 can be used in the touch sensing component of a sensing panel (not shown in the figure), which is used to sense the position of a touch panel touched by the users. The users may touch the touch display apparatus directly, such as in smart cell phones, tablet computers etc., in order to control the apparatus.

Please refer to figure 3 again. The active touch sensing circuit apparatus 300 comprises a sensing unit 310, a resistance (known as thin film transistor) 308, and a transistor 302. The sensing unit 310 has a first end 3102 and a second end 3104. The first end 3102 of sensing unit 310 connects a prescribed constant voltage V_{com}. The resistance 308 has a first end 3082 and a second end 3084. Only an active touch sensing circuit apparatus 300 is disclosed in the embodiment. However, it is known that the touch sensing component of a sensing panel (not shown in the figure) may include a plurality of the above-mentioned active touch sensing circuit apparatus 300. In the embodiment, the transistor 302 may be a thin film transistor (TFT). The transistor 302 of this case may be replaced by various thin film transistors.

In figure 3, the first end 3082 of resistance 308 connects the second end 3104 of sensing unit 310, and the second end 3084 of resistance 308 connects the first scan line G_{N-1}. The transistor 302 has a control end 3022, an input end 3024, and an output end 3026. The control end 3022 of transistor 302 connects the second end 3104 of sensing unit 310. The second scan line G_{N} connects the input end 3024 of the transistor 302. The read out line R_{N} connects the output end 3026 of the transistor 302. The read out line R_{N} is used to read a current signal outputted by the output end 3026. The resistance of this embodiment is not limited by common resistance component. It may be achieved by other components, such as a thin film transistor.

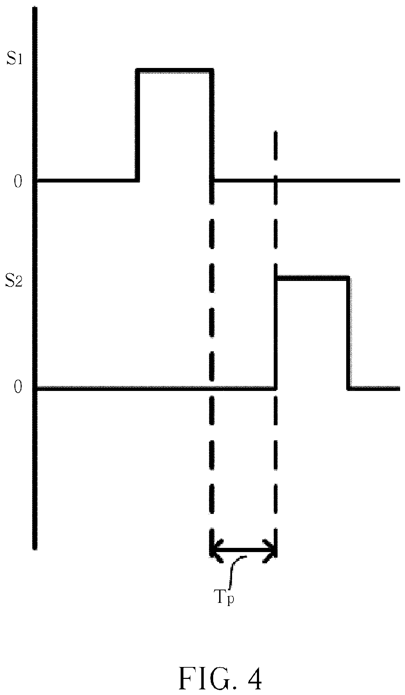

Please continue referring to figure 3. The first scan line G_{N-1} further comprises a first signal S₁. The second scan line G_{N} further comprises a second signal S₂. The first signal S₁ is changed from the high electric potential to the low electric potential. The second signal S₂ is changed from the low electric potential to the high electric potential. There is a prescribed time interval Tₚ between the first signal S₁ and the second signal S₂. As shown in figure 4, it is used to adjust and assure no parasitical capacitance effect, so that the current flows out with no contact.

In this embodiment, when the finger of a user touches the active touch sensing circuit apparatus 300 installed in the touch panel (not shown in the figure), the sensing value of the sensing unit 310 is changed, and the input wave form of control end 3022 of transistor 302 is also changed. The output end 3026 generates an open current I, and the read out line R_{N} transmits the open current I. The wave form will be changed, because a RC delay is produced by the resistance and the variable capacitance.

In another embodiment, the sensing unit 310 of the active touch sensing circuit apparatus 300 is a variable capacitance. When the finger of a user touches the variable capacitance, the capacitance value of the variable capacitance is changed. In addition, when the capacitance value is changed, the corresponding wave form will be changed. The input wave form received by the control end 3022 of transistor 302 will also be changed. Finally, the output end 3026 generates an open current I, and the read out line R_{N} transmits the open current I.

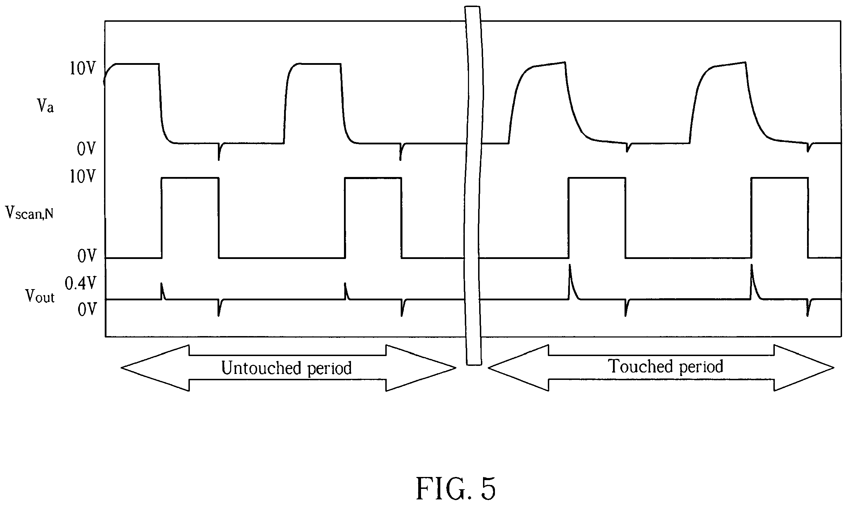

Please refer to figure 3 and figure 5, wherein figure 5 shows the measurement result of the active touch sensing circuit shown in figure 3. The control end 3022 (gate electrode) of transistor 302 connects the sensing unit 310 and the resistance 308 in order to form a RC low-pass filter. The voltage applied on the Node a is the wave form passing through this low-pass filter, as the wave form Vₐ shown in figure 5. The wave form Vₐ connects the control end 3022 of transistor 302. The electric potential of the second scan line G_{N} is V_{scan,N}. When the active touch sensing circuit apparatus 300 is untouched, and the electric potential V_{scan,N} in the second scan line G_{N} is switched to a high electric potential, the electric potential Va in Node a is switched from the high electric potential to the low electric potential, so that the transistor can be kept in a closed state (low current).

When the active touch sensing circuit apparatus 300 is touched, the electric potential in Node a is influenced by the resistance and capacitance. The time for switching to the low electric potential will be delayed, so that the transistor is kept in a closed state (low current). Thus, when the electric potential V_{scan,N} in the second scan line G_{N} is switched to the high electric potential, an open current I will be generated simultaneously. The open current I will be transmitted and read by the read out line R_{N}.

In this embodiment of the invention, the large current will be generated only upon touching. There is no current generated when the sensing unit is untouched, which means the whole circuit consumes lower power. The large open current I will be used as the response signal of the active touch sensing circuit apparatus 300. Thus the influence of component variation can be greatly reduced. The read of simultaneous large current is very low for the design demand of the integrated circuit. Thus the circuit cost can be reduced, and it can also be used in a touch panel of a large area.

It is understood that various other modifications will be apparent to and can be readily made by those skilled in the art without departing from the scope of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. An active matrix touch sensing circuit apparatus (300) used in a touch panel, **characterized by**:
a sensing unit (310) comprising a variable capacitance, a first end (3102) of the sensing unit (310) connecting a prescribed constant voltage;
a resistance (308), a first end (3082) of the resistance (308) connecting a second end (3104) of the sensing unit (310), and a second end (3084) of the resistance (308) connecting a first scan line comprising a first signal, the resistance (308) and the sensing unit (310) forming a low pass RC filter; and
a transistor (302), a gate end (3022) of the transistor (302) connecting the second end (3104) of the sensing unit (310), a second scan line comprising a second signal connecting a input end (3024) of the transistor (302), and a read out line connecting an output end (3026) of the transistor (302);
wherein, when a body does not touch the sensing unit (310) there is no current generated by the transistor (302), and when a body touches the sensing unit (310), a capacitance value of the variable capacitance of the sensing unit (310) is changed and an input wave form of the control end (3022) is changed accordingly due to an RC delay generated by the RC low pass filter; and
wherein the first signal is changed from a high electric potential to a low electric potential, and the second scan line further comprises a second signal and the second signal is changed from a low electric potential to a high electric potential, and
wherein there is a prescribed time interval between the first signal and the second signal, so that when one of the first or second scan line is at the high electric potential, the output end (3026) generates an open current, the read out line transmitting the open current.

2. The apparatus (300) according to claim 1, **characterized in that** the transistor (302) comprises a thin film transistor.

## Patentansprüche

1. Aktive Matrix-Berührungs-Erfassungs-Schaltkreis-Vorrichtung (300), die in einem Bildschirm-Tastfeld verwendet wird, **gekennzeichnet durch**:
eine Erfassungseinheit (310) mit einer variablen Kapazität, worin ein erstes Ende (3102) der Erfassungseinheit (310) mit einer bestimmten konstanten Spannung verbunden ist;
einen Widerstand (308), worin ein erstes Ende (3082) des Widerstands (308) mit einem zweiten Ende (3104) der Erfassungseinheit (310) verbunden ist, und worin ein zweites Ende (3084) des Widerstands (308) mit einer ersten Zeilenabtastung verbunden ist, die ein erstes Signal umfasst, worin der Widerstand (308) und die Erfassungseinheit (310) einen Tiefpass-RC-Filter bilden; und
einen Transistor (302), worin ein Gate-Ende (3022) des Transistor (302) mit dem zweiten Ende (3104) der Erfassungseinheit (310) verbunden ist, worin eine zweite Zeilenabtastung ein zweites Signal umfasst, das ein Eingabe-Ende (3024) des Transistors (302) verbindet, und eine Auslese-Zeile umfasst, die mit einem Ausgabe-Ende (3026) des Transistors (302) verbunden ist; worin, wenn ein Körper die Erfassungseinheit (310) nicht berührt, vom Transistor (302) kein Strom erzeugt wird, und wenn ein Körper die Erfassungseinheit (310) berührt, ein Kapazitäts-Wert der variablen Kapazität der Erfassungseinheit (310) verändert wird und eine Eingabewellen-Form des Steuer-Endes (3022) aufgrund der durch den Tiefpass RC-Filter erzeugten RC-Verzögerung entsprechend verändert wird; und
worin das erste Signal von einem hohen elektrischen Potential zu einem geringen elektrischen Potential verändert wird, und worin die zweite Zeilenabtastung weiter ein zweites Signal umfasst, und worin das zweite Signal von einem geringen elektrischen Potential zu einem hohen elektrischen Potential verändert wird und
worin ein bestimmtes Zeitintervall zwischen dem ersten und dem zweiten Signal vorgesehen ist, so dass wenn die erste oder die zweite Zeilenabtastung bei dem hohen elektrischen Potential ist, das Ausgabe-Ende (3026) einen Arbeits-Strom erzeugt und die Ausgabe-Zeile den Arbeits-Strom überträgt.

2. Vorrichtung (300) nach Anspruch 1, **dadurch gekennzeichnet, dass** der Transistor (302) einen Dünnschicht-Transistor umfasst.

## Revendications

1. Appareil à circuit de détection de commande tactile à matrice active (300) utilisé dans un écran tactile, **caractérisé par** :
une unité de détection (310) comprenant une capacité variable, une première extrémité (3102) de l'unité de détection (310) reliant une tension constante prescrite ;
une résistance (308), une première extrémité (3082) de la résistance (308) reliant une deuxième extrémité (3104) de l'unité de détection (310), et une deuxième extrémité (3084) de la résistance (308) reliant une première ligne de balayage comprenant un premier signal, la résistance (308) et l'unité de détection (310) formant un filtre passe-bas RC ; et
un transistor (302), une extrémité de commande (3022) du transistor (302) reliant la deuxième extrémité (3104) de l'unité de détection (310), une deuxième ligne de balayage comprenant un deuxième signal reliant une extrémité d'entrée (3024) du transistor (302), et une ligne de lecture reliant une extrémité de sortie (3026) du transistor (302) ;
dans lequel, lorsqu'un corps ne touche pas l'unité de détection (310) il n'y a pas de courant généré par le transistor (302), et lorsqu'un corps touche l'unité de détection (310), une valeur de capacité de la capacité variable de l'unité de détection (310) est modifiée et une forme d'onde d'entrée de l'extrémité de commande (3022) est modifiée en raison d'un retard RC généré par le filtre passe-bas RC ; et
dans lequel le premier signal est modifié en passant d'un potentiel électrique élevé à un potentiel électrique bas, et la deuxième ligne de balayage comprend en outre un deuxième signal qui est modifié pour passer d'un potentiel électrique bas à un potentiel électrique élevé, et
dans lequel il existe un intervalle de temps prescrit entre le premier signal et le deuxième signal, de sorte que lorsque l'une des première ou deuxième lignes de balayage présente un potentiel électrique élevé, l'extrémité de sortie (3026) génère un courant ouvert, la ligne de lecture transmettant le courant ouvert.

2. Appareil (300) selon la revendication 1, **caractérisé en ce que** le transistor (302) comprend un transistor à film mince.
